# EUROPÄISCHE PATENTSCHRIFT

(11) **EP 0 705 858 B1**
(45) Veröffentlichungstag und Bekanntmachung des Hinweises auf die Patenterteilung: **17.12.1997**
(21) Anmeldenummer: 95115693.4
(22) Anmeldetag: 05.10.1995
(51) Int. Cl.: C08G 63/20, C08G 63/199, C08G 18/42, C09D 175/06

(54) **Neue Polyesterpolyole und ihre Verwendung als Polyolkomponente in Zweikomponenten-Polyurethanlacken**
Novel polyesterpolyols and their use as a polyolcomponent in two-component polyurethane lacquers
Polyesterpolyols nouveaux et leur utilisation comme composants polyols dans des vernis de polyuréthane à deux composants

(30) Priorität: 07.10.1994 DE 4435867
(43) Veröffentlichungstag der Anmeldung: 10.04.1996
(73) Patentinhaber: SYNTHOPOL CHEMIE Dr. rer. pol. Koch GmbH & CO. KG, D-21614 Buxtehude (DE)
(72) Erfinder: Dos Santos, Antonio Manuel, D-21614 Buxtehude (DE)
(74) Vertreter: Nielsch, Walter

(56) Entgegenhaltungen:
- EP-A- 0 036 975
- DE-A- 3 532 864
- DE-A- 3 918 968

## Beschreibung

Die vorliegende Erfindung betrifft neue Polyesterpolyole auf Basis ausgewählter Ausgangsmaterialien und ihre Verwendung in Kombination mit Lackpolyisocyanaten als Bindemittel bzw. als Bindemittelkomponente in Zweikomponenten-Polyurethanlakken bei der Beschichtung von Metallen, Hölzern, Papieren, Pappen sowie Kunststoffformteilen.
Aufgabe der Erfindung ist es, solche neue Polyesterpolyole zur Verfügung zu stellen, die folgende Anforderungen erfüllen:
1. Die neuen Polyesterpolyole sollen es gestatten, mit Polyisocyanaten vernetzbare Reaktionlacke herzustellen, die einen deutlich herabgesetzten Lösungsmittelbedarf haben, wie dies die in Vorbereitung befindliche Umweltschutz-Gesetzgebung fordern wird, insbesondere im Automobil-Reparaturbereich. Entwürfe hierzu existieren bereits. (Europäische Vereinigung der Verbände der Lack-, Druckfarben- und Künstlerfarbenfabrikanten [CEPE] Technology guideline for vehicle refinishes [12.02.92])
2. Die neuen Polyesterpolyole sollen als Bindemittelkomponente für mit Polyisocyanaten vernetzbare Klarlacke, oder pigmentierte Reaktionslacke zur Herstellung von Überzügen auf Metallen, Hölzern, Papieren, Pappen sowie Kunststofformteilen geeignet sein.
3. Die aus Reaktionslacken, die die neuen Polyesterpolyole enthalten, erhältlichen Überzüge müssen physikalisch bei Raumtemperatur, z.B. für die Holzlackierung, bei ca. 60°C für die Autoreparatur-Lackierung und bei ca. 80°C für die Kunststoff-Lackierung in kurzer Zeit trocknen.
4. Damit die Reaktionslacke, die die neuen Polyesterpolyole enthalten, sehr vielseitig einsetzbar sind, sind Chemikalienbeständigkeit und hohe mechanische Widerstandsfähigkeit für die erhaltenen ausgehärteten Überzugsfilme unbedingt erforderlich.
5. Gegenüber den bisherigen Polyesterpolyolen für den gleichen Einsatzbereich, die meistens aromatische Komponenten eingebaut enthalten, sollen die neuen Polyesterpolyole Reaktionslacke herzustellen gestatten, deren Überzugsfilme sich durch eine hervorragende Wetterbeständigkeit, insbesondere Glanzhaltung und Vergilbungsbeständigkeit auszeichnen.
6. Die neuen Polyesterpolyole sollen in gelöster Form möglichst farblos sein, damit sich daraus Reaktionslacke herstellen lassen, die als Klarlacke und Weißlacke keine Eigenfarbe aufzeigen.

Es ist seit langem bekannt, verschiedene Substrate mit Zweikomponenten-Polyurethanlacken auf Basis von Hydroxylguppen aufweisenden Polyestern, Polyethern oder Polyacrylaten und organischen Polyisocyanaten zu beschichten. Die resultierenden Lacküberzüge zeichnen sich insbesondere durch eine ausgezeichnete Härte, eine sehr gute Haftung und gute Wetterbeständigkeit aus. Die chemischen Grundlagen dieser Lacke und Überzüge werden u.a. in "Lackkunstharze" Hans Wagner/Hans FriedrichSarx, Carl Hanser Verlag, München, Seite 153 bis 173, 1971, beschrieben.

In EP-A-O 036 975 A2 ist im Beispiel 12 ein Polyester mit einer Säurezahl von ca. 9,8 und einer Hydroxylzahl von ~ 108 aus 38,10 Mol% Hexahydrophthalsäureanhydrid, 9,53 Mol% Adipinsäure, 21,42 Mol% Ethylenglykol, 21,42 Mol% Neopentylglykol und 9,53 Mol% Trimethylpropan beschrieben,der mit isocyanuratgruppenhaltigem Polyisocyanat auf Basis Hexamethylendiisocyanat und üblichen Zusätzen zu einem Klarlack verarbeitet wird, der 50 Gew.-% organische Lösungsmittel enthält. Nach den dortigen Angaben auf Seite 29 muß der nach Beispiel 12b erhaltene Klarlack noch mit einem Lösungsmittelgemisch auf eine verarbeitungsfähige Konsistenz eingestellt werden. Aus diesen Angaben ergibt sich, daß dieser Polyester keine Reaktionslacke ergibt,die einen herabgesetzten Lösungsmittelbedarf haben.

DE-A-39 18 968 zeigt auf Seite 12, Zeilen 32 bis 40 die Herstellung eines Polyesterharzes, aufgebaut aus 29,6 Mol% Hexahydroterephthalsäure, 16,1 Mol% Isophthalsäure, 10,9 Mol% Trimethylolpropan und 43,4 Mol% Neopentylglykol mit einer Säurezahl 6, einer Hydroxylzahl von 125 und einem mittleren Molekulargewicht von 4010. Gemäß Tabelle 1 auf Seite 13 wird das vorstehend genannte Polyesterharz OH-P mit niedermolekularer Polyollösung (LMP-1, erhalten durch Kondensation von Cyclohexandimethanol, Trimethylolpropan und Adipinsäure; LMP-1 hat eine Säurezahl von 7, eine Hydroxylzahl von 247, mittleres Molekulargewicht von 1170) und Polyisocyanat zu einem Klarlack verarbeitet. Diese Tatsache läßt darauf schließen, daß der (a.a.O. Seite 12, Zeilen 32 bis 40) genannte Polyester nur zusammen mit Polyisocyanaten keine brauchbaren Klarlacke liefert. Auch sind keine Angaben zu finden, daß die (a.a.O. Seiten 15 und 16 in den Patentansprüchen 1 bis 6 genannten klaren Beschichtungsmittel aus (A) niedermolekularem Polyol, (B) hydroxylgruppenhaltigem Harz, welches hydroxylgruppenhaltiges Acrylharz und/oder hydroxylgruppenhaltiges Polyesterharz und/ oder hydroxylgruppenhaltiges Polyesterharz oder ein lactonmodifiziertes, hydroxylgruppenhaltiges Acrylharz umfaßt, als lösungsmittelarme, gebrauchsfertige Beschichtungsmittel vorliegen können.

Das auf den neuen Polyesterpolyolen basierende neue Lacksystem sollte insbesondere folgenden Anforderungen genügen:
1. Gute Glanzhaltung:
   Der Lackfilm bei der Autoreparaturlackierung z.B. sollte nicht schneller abbauen als derjenige von der Erstlackierung.
2. Keine Nachversprödung:
   Auch nach längerer Bewitterung darf der Film nicht nachverspröden.
3. Niedrige Trockentemperatur:
   Die erforderlichen Trockentemperaturen- und zeiten sollten aus verschiedenen Gründen u.a. der Energieersparnis möglichst niedrig sein.
4 Reparaturfähigkeit:
   Die Trocknungsbedingungen eines solchen Systems sollten neben der Erstlackierung auch eine Reparaturlackierung mit Trocknung bei 60°C, 80°C oder Raumtemperatur ermöglichen.

Wie jetzt überraschenderweise herausgefunden wurde, gelingt es durch die Verwendung der nachstehend näher beschriebenen erfindungsgemäßen Polyesterpolyole auf Basis ausgewählter Ausgangsmaterialien als Polyhydroxylkomponente in Zweikomponenten-Polyurethanlacken die gestellten Aufgaben zu lösen.

Gegenstand der Erfindung sind Polyesterpolyole mit Hydroxylzahlen von 120 bis 250 und Säurezahlen von 5 bis 30 aufgebaut aus Umsetzungsprodukten von
a) 5 bis 50 Mol-% Neopentylglykol
b) 10 bis 45 Mol-% Trimethylolpropan
c) 40 bis 52 Mol-% Hexahydrophtalsäureanhydrid,
wobei die sich unter a), b) und c) angegebenen Mol-%-Angaben jeweils zu 100 Mol-% ergänzen.

Gegenstand der Erfindung ist auch die Verwendung dieser erfindungsgemäßen Polyesterpolyole, gegebenenfalls in Abmischung mit anderen organischen Polyhydroxylverbindungen, als Bindemittelkomponente für Zweikomponenten-Polyurethanlacke, die Lackpolyisocyanate, sowie gegebenenfalls die in der Polyurethanlacktechnologie üblichen Hilfs- und Zusatzmittel enthalten, bei der Herstellung von Lacküberzügen auf Metallen, Hölzern, Papieren, Pappen und Kunststoffteilen.

Die besonders gute Eignung der erfindungsgemäßen Polyesterpolyole ist auf die erfindungsgemäße Auswahl der den Polyesterpolyolen zugrundeliegenden Ausgangsmaterialien und deren Mengenverhältnis zurückzuführen. Die erfindungsgemäßen Polyesterpolyole weisen Hydroxylzahlen innerhalb des Bereichs von 120 bis 250, vorzugsweise 150 bis 220, Säurezahlen von 5 bis 30, vorzugsweise 15 bis 25, und ein mittleres, aus der Stöchiometrie der eingesetzten Ausgangsmaterialien berechenbares Molekulargewicht von 800 bis 4000, vorzugsweise 1000 bis 3000, auf. Die erfindungsgemäßen Polyesterpolyole sind im allgemeinen feste farblose bis hellgelb gefärbte, klare Harze, die in inerten Lacklösungsmitteln wie beispielsweise Kohlenwasserstoffen, wie Toluol, Xylol, Solvent Naphta oder höheren Alkylbenzolen, Estern wie Ethylacetat, Butylacetat, Ethoxypropylacetat, Ethoxyethylpropionat, Ketonen, wie Methylethylketon oder Methylisobutylketon oder deren Gemischen, löslich sind.

Die Herstellung der erfindungsgemäßen Polyesterpolyole erfolgt in an sich bekannter Weise nach Methoden wie sie beispielsweise in "Ullmanns Enzyklopädie der technischen Chemie, Verlag Chemie Weinheim, 4. Auflage (1980), Band 19, Seiten 61 ff. oder von
H. Wagner und H.F Sarx in "Lackkunstharze", Carl Hanser Verlag, München (1971), Seiten 86-152 ausführlich beschrieben sind. Die Veresterung erfolgt in Gegenwart eines Inertgases, z.B. Stickstoff, gegebenenfalls in Gegenwart einer katalytischen Menge eines üblichen Veresterungskatalysators wie z.B. Säuren, Basen oder Übergangsmetallverbindungen wie z.B. Titantetrabutylat, bei ca. 150-260°C. Die Veresterungsreaktion wird so lange durchgeführt, bis die angestrebten Werte für die Hydroxylund Säurezahl erreicht sind. Das Molekulargewicht der erfindungsgemäßen Polyesterpolyole kann aus der Stöchiometrie der Ausgangsmaterialien (unter Berücksichtigung der resultierenden Hydroxyl- und Säurezahlen) berechnet werden.

Bei der erfindungsgemäßen Verwendung der erfindungsgemäßen Polyesterpolyole werden diese gegebenenfalls in Abmischung mit anderen, aus der Polyurethanlacktechnologie bekannten organischen Polyhydroxylverbindungen als Polyhydroxyl- Komponente eingesetzt. Bei diesen anderen Polyhydroxylverbindungen kann es sich um die üblichen Polyester-, Polyether- oder Polyacrylat-Polyole handeln.
Vorzugsweise werden als weitere organische Polyhydroxylverbindugn, falls solche überhaupt neben den erfindungswesentlichen Polyesterpolyolen zum Einsatz gelangen, die an sich bekannten Polyacrylatpolyole des Standes der Technik eingesetzt.

Als Abmischkomponente geeignete Polyacrylatpolyole sind z.B. in Lacklösungsmitteln der bereits beispielhaft gennanten Art lösliche Copolymerisate wie diese nach DE-OS 40 01 580, DE-OS 41 24 167 oder DE-OS 28 58 096 erhältlich sind. Der Hydroxylgruppengehalt dieser Polyacrylatpolyole liegt im allgemeinen zwischen 2 und 5 Gew. - %. Bei der erfindungsgemäßen Verwendung der erfindungsgemäßen Polyesterpolyole können diese in Abmischung mit bis zu 90, vorzugsweise bis zu 50 Hydroxyläquivalent%, bezogen auf alle Polyhydroxylverbindungen, an anderen Polyolen der beispielhaft genannten Art zum Einsatz gelangen. Besonders bevorzugt werden jedoch die erfindungsgemäßen Polyesterpolyole als alleinige Polyol-Komponente bei der erfindungsgemäßen Verwendung eingesetzt.

Die zur Vernetzung der erfindungsgemäßen Polyesterpolyole verwendbaren Polyisocyanate sind lacktypische Polyisocyanate.
Der Anteil an Polyisocyanat-Vernetzer wird so gewählt, daß auf eine Hydroxylgruppe der Bindemittelmischung 0,5 bis 1,5 Isocyanat-Gruppen entfallen. Überschüssige Isocyanat-Gruppen können durch Feuchtigkeit abreagieren und zur Vernetzung beitragen. Es können aliphatische, cycloaliphatische und aromatische Polyisocyanate verwendet werden wie Hexamethylendiisocyanat,Trimethylhexamethylendiisocyanat, Isophorondiisocyanat, 4,4'Diisocyanatodicyclohexylmethan, Toluylen-2,4-diisocyanat,o-,m-und p-Xylylendiisocyanat, 4,4'- Diisocyanatodiphenylmethan; verkappte Polyisocyanate, wie mit CH-, NH- oder OH-aciden Verbindungen verkappte Polyisocyanate; sowie z.B. Biuret-, Allophanat-, Urethan- oder Isocyanurat- Gruppen enthaltene Polyisocyanate. Beispiele für derartige Polyisocyanate sind ein Biuretgruppen enthaltenes Umsetzungsprodukt aus 3 Molen Hexamethylendiisocyanat mit 1 Mol Wasser mit einem NCO-Gehalt von ca. 22% (entsprechend dem Handelsprodukt Desmodur N BAYER AG,eingetragenes Warenzeichen); ein Isocyanatgruppen enthaltenes Polyisocyanat, das durch Trimerisierung von 3 Molen Hexamethylendiisocyanat hergestellt wird mit einem NCO-Gehalt von etwa 21,5% (entsprechend dem Handelsprodukt Desmodur N 3390 BAYER AG, eingetragenes Warenzeichen) oder Urethangruppen enthaltene Polyisocyanate, welche Reaktionsprodukte darstellen aus 3 Molen Toluylendiisocyanat und 1 Mol Trimethylolpropan mit einem NCO- Gehalt von etwa 17,5% (entsprechend dem Handelsprodukt Desmodur L BAYER AG, eingetragenes Warenzeichen.)
Bevorzugt eingesetzt werden Desmodur N und Desmodur N3390, BAYER AG, eingetragenes Warenzeichen.

In den bei der erfindungsgemäßen Verwendung zum Einsatz gelangenden Zweikomponenten-Polyurethanlacken liegen die Polyolkomponente und die Polyisocyanatkomponente in, einem Äquivalentverhältnis von Isocyanatgruppen zu Hydroxylgruppen von 2:1 bis 1:2, vorzugsweise 1,5:1 bis 1:1,5, entsprechenden Mengen vor. Die durch Vermischen der beiden Komponenten erhaltenen Zweikomponenten-Bindemittel haben nur eine begrenzte Verarbeitungszeit von ca. 2 bis 48 Stunden und werden unter Mitverwendung der üblichen Hilfs- und Zusatzmittel verarbeitet. Diese gegebenenfalls mitzuverwendenden Hilfs- und Zusatzmittel können entweder dem Gemisch oder den Einzelkomponenten vor deren Durchmischung hinzugefügt werden.

Als Hilfs - und Zusatzmittel kommen beispielsweise inerte Lösungsmittel in Betracht, wie z.B. Ethylacetat, Butylacetat, Methylethylketon, Methylisobutylketon, Ethoxypropylacetat, Methoxypropylacetat, Ethoxyethylpropionat, Methoxybutylacetat, Butylglykolacetat, Toluol, Xylol, Solvent Naphta, Testbenzin oder beliebige Gemische dieser Lösungsmittel.

Die Lösungsmittel werden in einer Menge von bis zu 60, vorzugsweise bis zu 45 Gew.- %, bezogen auf Gesamtgemisch, mitverwendet.

Weitere, gegebenenfalls mitzuverwendene Hilfs- und Zusatzmittel sind z.B. Weichmacher wie z.B. Trikresylphosphat oder Phtalsäurediester, Chlorparaffine, Pigmente und Füllstoffe, wie Titanoxid, Bariumsulfat, Kreide, Ruß; Katalysatoren wie z.B. N,N-Dimethylbenzylamin, N-Methylmorpholin, Bleioctoat oder Dibutylzinndilaurat;Verlaufmittel; Verdickungsmittel, gegebenenfalls Stabilisatoren, wie substituierte Phenole, organofunktionelle Silane als Haftvermittler und Lichtschutzmillel sind beispielsweise sterisch gehinderte Amine, wie sie u.a. in DE-OS 2 417 353 (=US-PS 4 123 418 und US-PS 4 110 304) und DE-OS 2 456 864 (= US-PS 3 993 655 und US-PS 4 221 701) beschrieben sind. Besonders bevorzugte Verbindungen sind:
Bis-(1,2,2,2,6,6-pentamethylpiperidyl-4) -sebacat, Bis-(2,2,6,6-tetrametylpiperidyl-4)-sebacat, n-Butyl-(3,5-di tert. -butyl-4-hydroxybenzyl) -malonsäure-bis(1,2,2,6,6-pentamethylpiperidyl-4) -ester.

Die den Füllstoffen und Pigmenten anhaftene Feuchtigkeit kann durch vorhergehende Trocknung oder durch Mitverwendung von wasseraufnehmenden Stoffen, wie z.B. Molekularsieb-Zelolithen, entfernt werden.
Die Trocknung der bei der erfindungsgemäßen Verwendung resultierenden Lackfilme kann bei Raumtemperatur erfolgen und bedarf keiner Temperaturerhöhung, um die eingangs erwähnten, optimalen Eigenschaften zu erreichen. Die verhältnismäßig schnell verlaufende Trocknung bei Raumtemperatur kann durch eine Temperaturerhöhung auf ca. 60 bis 120°C, vorzugsweise 60 bis 80°C, während eines Zeitraumes von 20 bis 40 Minuten zusätzlich beschleunigt werden. Eine höhere Trocknungstemperatur und somit eine Verkürzung des Einbrennprozesses ist zwar möglich, jedoch bei vielen Substraten wie Kunststoffteilen, Hölzern, Papieren und Pappen nicht ratsam.

Die erfindungsgemäß zum Einsatz gelangenden Reaktionslacke eignen sich vor allem für die Lackierung von Metallen, Hölzern, Papieren, Pappen sowie Kunststoffen, jedoch auch für andere Substrate.Besonders vorteilhaft eignen sich die erfindungsgemäß zum Einsatz gelangenen Reaktionslacke zum Lackieren von Metallen, wie sie beim Automobilbau und in der Industrie Verwendung finden. Wegen der gleichermaßen guten Eignung der erfindungsgemäß zum Einsatz gelangenen Reaktionslacke für Kunststoffe und Metalle eignen sich diese insbesondere auch hervorragend zur Lackierung von Konstruktionen wie z.B. Außenteile von Automobilen, die in moderner Gemischtbauweise aus Kunststoff- und Metallteilen hergestellt werden. Die besonderen Vorteile der erfindungsgemäß zum Einsatz gelangenden Lacke begünstigen diese "on line"-Lackierung insbesondere von Automobilaußenteilen, da die Härtung der Lackfilme bereits bei niedrigen Temperaturen erfolgen kann, so daß die Kunststoffe keiner übermäßigen Temperaturbelastung ausgesetzt werden, da die resultierenden Lackfilme eine ausgezeichnete Witterungsbeständigkeit aufweisen, so daß dekorative Lackierungen für eine lange Zeitdauer unverändert erhalten bleiben und Beanspruchungen durch Stoß oder Schlag schadlos überstehen. Hervorzuheben ist in diesem Zusammenhang insbesondere auch die ausgezeichnete Steinschlagfestigkeit von erfindungsgemäßhergestellten Automobil- Decklackierungen. Die mit den erfindungsgemäß zum Einsatz gelangten Zweikomponenten- Lacke erhaltenen Lackfilme erfüllen in optimaler Weise zwei an sich gegensätzliche Forderungen nämlich eine geringe Molmasse und die damit verbundene Einsparung von Lösungsmitteln bei gleichzeitig hoher Glanzhaltung.

Die erfindungsgemäß zum Einsatz gelangenden Reaktionslacke können nach allen üblichen Methoden der Lacktechnologie, wie z.B. Streichen, Spritzen oder Tauchen auf die zu beschichtenden Substrate aufgetragen werden. Die erfindungsgemäßen Reaktionlacke eignen sich sowohl zur Herstellung von Grundierungen als auch zur Herstellung von Zwischenschichten sowie auch zur Herstellung von Deckschichten auf den zu lackierenden Substraten.

Die Polyesterpolyole der Erfindung liefern im allgemeinen gelöst in Butylacetat als 70%ige Lösungen, Viskositäten (gemessen nach DIN 53019 bei 23°C) von 1000 bis 6000 mPa*s, bevorzugt 1000 bis 5000 mPa*s.

Die nachfolgenden Beispiele dienen zur weiteren Erläuterung der Erfindung.

### Beispiel 1

| Polyesterpolyol aus | |
|---|---|
| 3,0 Mol Neopentylglykol | 312 g |
| 3,8 Mol Trimethylolpropan | 509 g |
| 6,0 Mol Hexahydrophthalsäureanhydrid | 925 g |
| Mittleres Molgewicht: | ca. 1330 |

Das vorstehende Gemisch wurde unter Stickstoff auf 190 bis 200°C erhitzt und das gebildete Reaktionswasser wurde laufend entfernt. Die Temperatur wurde im Verlauf von 7 bis 12 Stunden kontinuierlich auf 220°C erhöht bis die Säurezahl auf 15 bis 25 abgesunken war. Nach dem Abkühlen liegt das Reaktionsprodukt in fester Form vor. Durch mehrfache Wiederholung der Umsetzung wurden für die Polyesterpolyole folgende Werte gefunden.

| | 1. Versuch | 2. Versuch |
|---|---|---|
| Hydroxylzahlen (DIN 53240) | 196 | 200 |
| Säurezahlen (DIN 53402) | 18,7 | 19 |
| Viskositäten (DIN 53019) in mPa∗s | 2560 | 2880 |

Das Polyesterpolyol besteht aus 53 Mol-% Polyolen und 47 Mol-% Dicarbonsäure.

### Beispiel 2

| Polyesterpolyol aus | |
|---|---|
| 3,0 Mol Neopentylglykol | 312 g |
| 3,4 Mol Trimethylolpropan | 456 g |
| 6,0 Mol Hexahydrophthalsäureanhydrid | 925 g |
| Mittleres Molgewicht: | ca. 2330 |

Das vorstehende Gemisch wurde unter Stickstoff auf 190 bis 200°C erhitzt und das gebildete Reaktionswasser wurde laufend entfernt. Die Temperatur wurde im Verlauf von 3 bis 10 Stunden kontinuierlich auf auf 235°C erhöht bis die Säurezahl auf 15 bis 25 abgesunken war. Nach dem Abkühlen liegt das Reaktionsprodukt in fester Form vor. Durch mehrfache Wiederholung der Umsetzung wurden für die Polyesterpolyole folgende Werte gefunden.

| | 1. Versuch | 2. Versuch |
|---|---|---|
| Hydroxylzahlen (DIN 53240) | 156 | 158 |
| Säurezahlen (DIN 53402) | 20,2 | 18,6 |
| Viskositäten (DIN 53019) in mPa∗s | 3120 | 4480 |

Das Polyesterpolyol besteht aus 51,6 Mol-% Polyolen und 48,4 Mol-% Dicarbonsäure.

### Beispiel 3 mit Vergleich

Weißlack aufBasis eines Acrylatharzes gemäß DE-OS 40 01 580 Copolymerisat 1, 70%ig Solvent Naphta/Butylglykolacetat/Ethoxypropylacetat/Butylacetat als Vergleich und Polyesterpolyol gemäß Erfindung Beispiel 1, 75 %ig Butylacetat/Solvent Naphta 1:2.

| A | | |
|---|---|---|
| Acrylatharz gemäß DE-OS 40 01 580, Copolymerisat 1 | 25,00 g | -- |
| Polyesterpolyol gemäß Erfindung, Beispiel 1 | -- | 25,00 g |
| Byk 160 30% | 3,75 g | 3,75 g |
| DBTL 1%ig X | 0,50 g | 0,50 g |
| Butylacetat | 7,60 g | 10,60 g |
| Shellsol A | 1,80 g | 1,80 g |
| Kronos 2160 | 29,00 g | 29,00 g |
| Bentone 38 10% Xylene + 4% Anti Terra U | 1,50 g | 1,50 g |

Die folgenden Bestandteile wurden unter A gemischt und in eine Perlenmühle eingeführt und der Ansatz mit Perlen 30 min. gemahlen. Danach wurde der gemahlene Ansatz mit dem Gemisch unter B vereinigt.

| B | | |
|---|---|---|
| Acrylatharz gemäß DE-OS 40 01 580, Copolymerisat 1 | 19,00 g | -- |
| Polyesterpolyol gemäß Erfindung, Beispiel 1 | -- | 16,00 g |
| Byk 344 10% Xylol | 2,00 g | 2,00 g |
| Byketol OK | 3,00 g | 3,00 g |
| Butylacetat | 6,85 g | 6,85 g |

Der Lackansatz wurde dann mit dem Lackpolyisocyanat Desmodur N 3390 90%ig in den angegebenen Mengen versetzt und mit dem angegebenen Verdünner 1 auf Spritzviskosität eingestellt.

| Verdünnt auf Spritzviskosität mit Verdünner 1: | |
|---|---|
| Butylacetat | 25 g |
| Butoxyl (Methoxybutylacetat) | 5 g |
| Ethoxypropylacetat | 25 g |
| Shellsol A | 20 g |
| Xylene | 25 g |

| Auswertung der Eigenschaften von Beispiel 3 und Vergleich: | | |
|---|---|---|
| Acrylatharz auf Basis DE-OS 40 01 580, Copolymerisat 1 | 100 g | -- |
| Polyesterpolyol auf Basis Erfindung Beispiel 1 | -- | 100 g |
| Desmodur N 3390 90 % | 18 g | 18 g |
| Verdünner 1 | -- | 3 g |
| Viskosität 4mm Becher 20°C | 23 sec. | 23 sec. |
| nach 6 h | 47 sec | 47 sec. |
| Festkörper/1g (23 sec.)/1 h bei | 66,9 % | 66,2 % |

| Pendelhärte auf Glas, 200 µm Naßfilm: | | |
|---|---|---|
| 30 min. 60°C + 1 h | 11 sec. | 14 sec. |
| + 1 d | 48 sec. | 70 sec. |
| 30 min. 80°C + 1 h | 75 sec. | 110 sec. |
| + 1 d | 102 sec. | 115 sec. |
| Lufttrocknung + 1 d | 25 sec. | 24 sec. |
| + 2 d | 59 sec. | 48 sec. |
| + 7 d | 80 sec. | 60 sec. |

| phosph. Alubleche, Einschichtig, Lack Trockenzeit 60 min. 80°C + 4 h/QUV- Test | | |
|---|---|---|
| Glanz vom 0-Wert bei < 20° | 88,7 % | 84,0 % |
| nach 500 h | 66,3 % | 75,9 % |
| nach 1000 h | 19,5 % | 51,3 % |
| nach 1500 | 1,9 % | 22,0% |
| Glanz vom 0-Wert bei < 60° | 95 % | 91,5 % |
| nach 500 h | 89,1 % | 90,2 % |
| nach 1000 h | 40,0 % | 76,6 % |
| nach 1500 h | 9,2 % | 56,5 % |

Das Vergleichsacrylat stellt ein handelsübliches Produkt mit hervorragenden Eigenschaften dar, wie diese in der Automobil- und Nutzfahrzeug-Industrie gefordert wird. Überraschend ist, daß die Reaktionslacke der Erfindung bei gleichem Vernetzungsgrad Filme nach der Aushärtung liefern, die nach 1500 Stunden eine hervorragende Glanzhaltung aufweisen.
Gegenstand der Erfindung sind auch die Reaktionslacke sowie Verfahren zur Herstellung von Überzügen oder Grundierungen.

### Beispiel 4

| Polyesterpolyol aus | |
|---|---|
| 0,2 Mol Neopentylglykol | 20,84 g |
| 1,63 Mol Trimethylolpropan | 218,746 g |
| 1,8 Mol Hexahydrophthalsäureanhydrid | 277,56 g |
| Mittleres Molgewicht: | ca. 2900 |

Das vorstehende Gemisch wurde unter Stickstoff auf 190 bis 205°C erhitzt, und das gebildete Reaktionswasser wurde laufend entfernt. Die Temperatur wurde im Verlauf von 4 bis 10 Stunden kontinuierlich auf 230°C erhöht, bis die Säurezahl auf 10 bis 20 abgesunken war. Nach dem Abkühlen liegt das Reaktionsprodukt in fester Form vor. Es wurde für das Polyesterpolyol folgende Werte gefünden.

| | |
|---|---|
| Hydroxylzahl (DIN 53240) | 210 |
| Säurezahl (DIN 53402) | 15,9 |
| Viskosität (DIN 53019) in mPa∗s | 5500 |

Das Polyesterpolyol besteht aus 50,414 Mol-% Polyolen und 49,587 Mol-% Dicarbonsäure.

Die in Beispielen 1,2 und 4 angegebenen Viskositäten (gemessen nach DIN 53019) bei 23°C in mPa∗s beziehen sich auf Polyesterpolyole gelöst in Butylacetat als 70%ige Lösungen.

Vergleichuntersuchungen zum Nachweis der Erfindungshöhe unter Berücksichtigung von DE-OS 35 32 864 und EP-0 561 152 A 1,die aus den nachstehend aufgeführten Tabellen 1 bis 6 zu ersehen sind.

Aus DE-OS 35 32 864 ist ein Verfahren zur Herstellung von hydroxylhaltigen, mit Isocyanatgruppen hochreaktiven gesättigten Polyesterharzen bekannt, bei dem 47 Mol.-% Methylhexahydrophthalsäure bzw. anhydrid mit 21 Mol.-% Trimethylolpropan und 31 Mol.-% Neopentylglykol unter Mitverwendung von H₃PO₄ 12 bis 15 Stunden bei 110 bis 220°C polykondensiert wird (vgl. a. a. O. Anspruch 1 in Verbindung mit Beispiel 1 und Vergleichsbeispiel 1). Als Ergebnis wird ein fast farbloses Harz mit einer Säurezahl von 10,2 mg KOH/g bzw. 5,0 mg KOH/g und einer OH-Zahl von 99 bzw. 94 erhalten (vgl. a. a. O. Beispiel 1 und Vergleichsbeispiel 1).

Aus EP-0 561 152 A 1 sind Polyesterpolyole aus Neopentylglykol (41 Mol.-%), Trimethylolpropan (11 Mol.-%), Adipinsäure (23 Mol.-%), Hexahydrophthalsäureanhydrid (23 Mol.-%) und hypophosphoriger Säure bekannt, die in Verbindung mit blockierten Di.- und/ oder Polyisocyanaten zur Herstellung von Klarlacken geeignet sind (vgl. a. a. O. Beispiel 2 in Verbindung mit Anspruch 1). Der erhaltene Polyester hatte eine Säurezahl von 13,5 mg KOH/g, eine OH-Zahl von 200 mg KOH/g und eine zahlenmittlere Molekularmasse von 800 (gelpermeationschromatographisch, geeicht mit Polystyrolstandard) bei einer Polydispersität von 2,4.

Anfertigung von Vergleichs-Weißlacken auf Basis Polyesterpolyol gemäß Erfindung Beispiel 1, 75%ig Butylacetat/Solvent Naphta 1:2 aus Fabrik-mäßiger Herstellung, Polyesterpolyol gemäß Erfindung Beispiel 4, 70%ig in Butylacetat, DE-OS 35 32 867 Beispiel 1, 70%ig in Xylol (wobei das Polyesterpolyol mit einer Säurezahl von 58,4 mg KOH/g erhalten worden ist, die sich nicht absenken ließ) und EP-0 561 152 A 1 Beispiel 2, 77,6%ig in Butylacetat (wobei das Polyesterpolyol mit einer Säurezahl von 17,9 mg KOH/g erhalten worden ist).

**Tabelle 1**

| | | | | |
|---|---|---|---|---|
| Polyesterpolyol gemäß Erfindung, Beispiel 1 | 25,00 g | -- | -- | -- |
| Polyesterpolyol gemäß Erfindung, Beispiel 4 | -- | 25,00 g | -- | -- |
| Polyesterpolyol gemäß DE-OS 35 32 864 Beispiel 1 | -- | -- | 25,00 g | -- |
| Polyesterpolyol gemäß EP 0 561 152 A 1 Beispiel 2 | -- | -- | -- | 25,00 g |
| Byk 160 30% | 3,75 g | 3,75 g | 3,75 g | 3,75 g |
| Kronos 2160 | 29,00 g | 29,00 g | 29,00 g | 29,00 g |
| Bentone 38 10% Xylene + 4% Anti Terra U | 1,50 g | 1,50 g | 1,50 g | 1,50 g |
| DBTL 1%ig X | 0,50 g | 0,50 g | 0,50 g | 0,50 g |
| Butylacetat | 10,60 g | 4,60 g | 9,40 g | 10,10 g |
| Shellsol A | 1,80 g | 4,80 g | -- | 4,80 g |

Die unter Tabelle 1 folgenden Bestandteile wurden gemischt und in eine Perlenmühle eingeführt und der Ansatz mit Perlen 30 min. gemahlen. Danach wurde der gemahlene Ansatz mit dem Gemisch unter Tabelle 2 vereinigt.

**Tabelle 2**

| | | | | |
|---|---|---|---|---|
| Polyesterpolyol gemäß Erfindung, Beispiel 1 | 16,00 g | -- | -- | -- |
| Polyesterpolyol gemäß Erfindung, Beispiel 4 | -- | 19,00 g | -- | -- |
| Polyesterpolyol gemäß DE-OS 35 32 864 Beispiel 1 | -- | -- | 19,00 g | -- |
| Polyesterpolyol gemäß EP 0 561 152 A 1 Beispiel 2 | -- | -- | -- | 13,5 |
| Byk 344 10% Xylol | 2,00 g | 2,00 g | 2,00 g | 2,00 g |
| Byketol OK | 3,00 g | 3,00 g | 3,00 g | 3,00 g |
| Butylacetat | 6,85 g | 6,85 g | 6,85 g | 6,85 g |

Der Lackansatz wurde dann mit dem Lackpolyisocyanat Desmodur N 3390 90%ig in den angegebenen Mengen versetzt.

**Tabelle 3**

| | | | | |
|---|---|---|---|---|
| Weißlack auf Basis Polyesterpolyol gemäß Erfindung, Beispiel 1 | 100 g | -- | -- | -- |
| Weißlack auf Basis Polyesterpolyol gemäß Erfindung, Beispiel 4 | -- | 100 g | -- | -- |
| Weißlack auf Basis Polyesterpolyol gemäß DE-OS 35 32 864 Beispiel 1 | --- | -- | 100 g | -- |
| Weißlack auf Basis Polyesterpolyol gemäß EP 0 561 152 A 1 Beispiel 2 | -- | -- | -- | 100 g |
| Desmodur N 3390 90% | 18 g | 18 g | 18 g | 18 g |
| Viskosität 4mm Becher 20°C | 25 sec. | 60 sec. | 17 sec. | 14 sec. |
| Festkörper/1g Harz/1 h bei 130°C | 67,9% | 67,7% | 69,2% | 67,6% |

Pendelhärte auf Glas, 200 µm Naßfilm:

**Tabelle 4**

| | | | | |
|---|---|---|---|---|
| 30 min. 60°C + 1 h in sec. | 23 | 25 | 43 | 6 |
| + 1 d in sec. | 118 | 108 | 68 | 20 |
| 30 min. 80°C + 1 h in sec. | 146 | 145 | 128 | 20 |
| + 1 d in sec. | 165 | 150 | 118 | 38 |
| Lufttrocknung + 1 d in sec. | 46 | 59 | 24 | 13 |
| + 2 d in sec. | 83 | 80 | 28 | 15 |

Die vorstehenden Ergebnisse der Pendelhärteprüfung auf Glas zeigen, daß die Weißlackfilme, die mit den Polyisocyanaten und Polyesterpolyolen der Erfindung Beispiel 1 und 4 hergestellt worden sind, ganz wesentlich verbesserte Werte gegenüber den Vergleichsprodukten gemäß dem Stand der Technik aufweisen. Bemerkenswert ist die wesentlich verbesserte Endhärte der Überzüge, die gegenüber mechanischem Angriff deutlich widerstandsfähiger sind.

Auswertung der Vergleichs-Weißlacke auf Stahlplatten mit einem konventionellen Füller lackiert; Vergleichs-Weißlacke nach 2 Stunden überlackiert. Dann forciert 60 min. bei 80°C und 5 Tage bei Lufttemperatur getrocknet.

**Tabelle 5**

| | | | | |
|---|---|---|---|---|
| Schichtstärke eines konventionellen, handelsüblichen Füllers | 27 - 28 µm | 27 - 28 µm | 25 - 28 µm | 25 - 27 µm |
| Schichtstärke vom Weißlack auf Basis Polyesterpolyol gemäß Erfindung, Beispiel 1 | 46 - 50 µm | -- | -- | -- |
| Schichtstärke vom Weißlack auf Basis Polyesterpolyol gemäß Erfindung, Beispiel 4 | -- | 58 - 60 µm | -- | -- |
| Schichtstärke vom Weißlack auf Basis Polyesterpolyol gemäß DE-OS 35 32 864 Beispiel 1 | -- | -- | 48 - 52 µm | -- |
| Schichtstärke vom Weißlack auf Basis Polyesterpolyol gemäß EP 0 561 152 A 1 Beispiel 2 | -- | -- | -- | 35 - 37 µm |
| Pendelhärte in sec. | 130 | 85 | 90 | 52 |
| Glanz im 60° Winkel | 92,7% | 90,0% | 90,0% | 91,4% |
| Erichsen-Tiefung | 8,8 mm | 7,8 mm | 8,8 mm | 10,7 mm |
| Haftung (Gitterschnitt) | Gt 0 | Gt 0 | Gt 0 | Gt 0 |
| Buchholzhärte | 111 | 95 | 67 | 63 |
| 5 min. Superbenzinbeständigkeit, sofort | in Ordnung | in Ordnung | matt | leichte Quellung, gelbe Färbung |
| 5 min. Superbenzinbeständigkeit, nach 1 Tag | in Ordnung | in Ordnung | leichte Markierung sichtbar | starke Markierug, gelbe Färbung |

Die erfindunggemäßen Überzugsmittel nach Beispiel 1 und 4 erfüllen die Anforderungen der Praxis an die Buchholzhärtung,. Dies bedeutet, daß die Filme durch die gesamte Schicht eine gute Durchhärtung besitzen. Die Vergleichprodukte entsprechen den Anforderungen in der Buchholzhärte nicht.

Die Auswertungen zeigen zudem, daß die Vergleichs-Weißlacke der Erfindung nach Beispiel 1 und Beispiel 4 Superbenzinbeständigkeiten aufweisen, wie diese in der Automobil- und Großraumfahrzeug-Industrie zwingend erforderlich sind. Die Vergleichsprodukte erfüllen diese Anforderungen nicht.

Klebebandtest auf Stahlplatten, die mit einem konventionellen Füller und den Vergleichs-Weißlacken beschichtet worden sind und 30 min. bei 60°C getempert wurden. 1 Stunde Abklebezeit. Auswertung nach 24 Stunden.

**Tabelle 6**

| | | | | |
|---|---|---|---|---|
| Schichtstärke eines konventionellen, handelsüblichen Füllers | 27 - 28 µm | 27 - 28 µm | 25 - 28 µm | 25 - 27 µm |
| Schichtstärke vom Weißlack auf Basis Polyesterpolyol gemäß Erfindung, Beispiel 1 | 46 - 50 µm | -- | -- | -- |
| Schichtstärke vom Weißlack auf Basis Polyesterpolyol gemäß Erfindung, Beispiel 4 | -- | 58 - 60 µm | -- | -- |
| Schichtstärke vom Weißlack auf Basis Polyesterpolyol gemäß DE-OS 35 32 864 Beispiel 1 | -- | -- | 48 - 52 µm | -- |
| Schichtstärke vom Weißlack auf Basis Polyesterpolyol gemäß EP 0 561 152 A 1 Beispiel 2 | -- | -- | -- | 35 - 37 µm |
| Lufttrocknung nach 30 min. | schwacher Abdruck | schwacher Abdruck | in Ordnung | starker Abdruck |
| Lufttrocknung nach 1 Stunden | fast in Ordnung | fast in Ordnung | in Ordnung | starker Abdruck |
| Lufttrocknung nach 2 Stunden | in Ordnung | in Ordnung | in Ordnung | starker Abdruck |
| Lufttrocknung nach 3 Stunden | in Ordnung | in Ordnung | in Ordnung | starker Abdruck |
| Lufttrocknung nach 4 Stunden | in Ordnung | in Ordnung | in Ordnung | mittelstarker Abdruck |
| Lufttrocknung nach 5 Stunden | in Ordnung | in Ordnung | in Ordnung | schwacher Abdruck |

Die Abklebetests erfüllen ebenfalls die in der Autoreparaturindustrie geforderten Kriterien. Gefordert werden Abklebfestigkeiten von unter 2 Stunden.

## Patentansprüche

1. Polyesterpolyole mit Hydroxylzahlen von 120 bis 250 und Säurezahlen 5 bis 30, aufgebaut aus Umsetzungsprodukten von
a) 5 bis 50 Mol-% Neopentylglykol,
b) 10 bis 45 Mol-% Trimethylolpropan,
c) 40 bis 52 Mol-% Hexahydrophtalsäureanhydrid,
wobei die sich unter a), b) und c) angegebenen Mol-%-Angaben jeweils zu 100 Mol-% ergänzen.

2. Polyesterpolyole gemäß Anspruch 1 mit Hydroxylzahlen von 150 bis 220 und Säurezahlen von 15 bis 25.

3. Polyesterpolyole gemäß Anspruch 1 oder 2 mit aus der Stöchiometrie der eingesetzten Ausgangsmaterialien berechenbaren Molekulargewichten von 800 bis 4000.

4. Polyesterpolyole gemäß Anspruch 3 mit berechenbaren Molekulargewichten von 1000 bis 3000.

5. Polyesterpolyole nach einem der Ansprüche 1, 3, 4, mit Säurezahlen von 10 bis 30.

6. Verwendung der Polyesterpolyole gemäß einem der Ansprüche 1 bis 5, gegebenenfalls in Abmischung mit anderen organischen Polyhydroxyverbindungen als Bindemittelkomponenten für Zweikomponenten-Polyurethanlacke, die Lackpolyisocyanate, sowie gegebenenfalls die in der Polyurethanlacktechnologie üblichen Hilfs- und Zusatzmittel enthalten bei der Herstellung von Lacküberzügen auf Metallen, Hölzern, Papieren, Pappen, sowie Kunststofformteilen.

7. Verwendung gemäß Anspruch 6, wobei es sich bei den mit Lacküberzügen zu versehenden Kunststofformteilen um solche handelt, wie sie im Automobilbau Verwendung finden.

8. Verwendung der Polyesterpolyole nach einem der Ansprüche 1 bis 5 in Reaktionslakken zur Herstellung von Überzügen oder Grundierungen, wobei die Reaktionslacke durch Mischen von
(A) Polyesterpolyolen,
(B) gegebenenfalls anderen organischen Polyhydroxylverbindungen,
(C) Polyisocyanaten als Härter,
(D) inerten organischen Lösungsmitteln und gegebenenfalls
(E) weiteren in Reaktionslacken üblichen Zusätzen,
erhältich sind.

9. Verwendung der Polyesterpolyole nach einem der Ansprüche 1 bis 5 zur Herstellung von Überzügen oder Grundierungen durch Auftragen eines Lackes auf Basis von Hydroxylgruppentragenden Verbindungen, Polyisocyanaten, inerten Lösungsmitteln sowie gegebenenfalls üblichen Zusätzen auf einen Träger und Aushärten bei Raumtemperatur oder erhöhter Temperatur bis 120°C.

## Claims

1. Polyesterpolyols having hydroxyl numbers of from 120 to 250 and acid numbers of from 5 to 30 synthesized from reaction products of
a) from 5 to 50 mol-% of neopentyl glycol,
b) from 10 to 45 mol-% of trimethylolpropane, and
c) from 40 to 52 mol-% of hexahydrophthalic anhydride,
the molar percentages stated under a), b) and c) in each case adding up to 100 mol-%.

2. Polyesterpolyols according to Claim 1 having hydroxyl numbers of from 150 to 220 and acid numbers of from 15 to 25.

3. Polyesterpolyols according to Claim 1 or 2 having molecular weights, calculable from the stoichiometry of the starting materials employed, of from 800 to 4000.

4. Polyesterpolyols according to Claim 3 having calculable molecular weights of from 1000 to 3000.

5. Polyesterpolyols according to one of Claims 1, 3 and 4 having acid numbers of from 10 to 30.

6. Use of the polyesterpolyols according to one of Claims 1 to 5, alone or in a blend with other organic polyhydroxy compounds, as binder components for two-component polyurethane coating materials which comprise paint polyisocyanates and also, if desired, the additives and auxiliaries customary in polyurethane coatings technology, and in the preparation of coatings on metal, wood, paper, board, and plastics mouldings.

7. Use according to Claim 6, where the plastics mouldings to be given coatings are those as used in automotive construction.

8. Use of the polyesterpolyols according to one of Claims 1 to 5 in reactive coating materials for producing coatings or primer coats, the reactive coating materials being obtainable by mixing
(A) polyesterpolyols,
(B) if desired, other organic polyhydroxy compounds,
(C) polyisocyanates as hardeners,
(D) inert organic solvents and, if desired,
(E) other additives customary in reactive coating materials.

9. Use of the polyesterpolyols according to one of Claims 1 to 5 for producing coatings or primer coats by applying a coating material based on hydroxyl-bearing compounds, polyisocyanates, inert solvents and, if desired, customary additives to a substrate and carrying out curing at room temperature or an elevated temperature up to 120°C.

## Revendications

1. Polyesterpolyols ayant des indices d'hydroxyle allant de 120 à 250 et des indices d'acide allant de 5 à 30, constitués de motifs résultant de la réaction de
a) 5 à 50 % en moles de néopentylglycol,
b) de 10 à 45 % en moles de triméthylolpropane,
c) de 40 à 52 % en moles d'anhydride hexahydrophtalique,
les pourcentages en moles indiqués sous a), b) et c) se complétant à 100 % en moles.

2. Polyesterpolyols conformes à la revendication 1 avec des indices d'hydroxyle allant de 150 à 220 et des indices d'acide allant de 15 à 25.

3. Polyesterpolyols conformes à la revendication 1 ou 2 ayant des masses molaires, calculables à partir de la stochiométrie des substances de départ utilisées, comprises entre 800 et 4000.

4. Polyesterpolyols conforme à la revendication 3 ayant des masses molaires calculables comprises entre 1000 et 3000.

5. Polyesterpolyols conformes à une des revendications 1, 3 ou 4 ayant des indices d'acide allant de 10 à 30.

6. Utilisation des polyesterpolyols conformes à une des revendications 1 à 5 éventuellement sous forme de mélanges avec d'autres composés organiques polyhydroxylés, en tant que liants pour des vernis de polyuréthannes bicomposants contenant des polyisocyanates pour vernis ainsi qu'éventuellement des adjuvants et additifs utilisés habituellemnet dans la technologie des vernis de polyuréthannes, pour la fabrication de revêtement en vernis sur des métaux, du bois, des papiers, des cartons ainsi que des pièces formées en matières plastiques.

7. Utilisation conforme à la revendication 6 dans laquelle les pièces formées en matières plastiques à vernir sont des pièces utilisées dans la construction automobile.

8. Utilisation des polyesterpolyols conformes à une des revendications 1 à 5 dans des vernis réactifs pour la préparation de revêtements ou d'apprêts, les vernis réactifs pouvant être préparées par mélange
(A) de polyesterpolyols,
(B) éventuellement d'autres composés organiques polyhydroxylés,
(C) de polyisocyanates fonctionnant comme agent de durcissement,
(D) de solvants organiques inertes et, éventuellement,
(E) d'autres additifs utilisés habituellement dans des vernis réactifs.

9. Utilisation des polyesterpolyols conformes à une des revendications 1 à 5 pour la préparation de revêtements ou d'apprêts par application, sur un support, d'un vernis à base de composés hydroxylés, de polyisocyanates, de solvants inertes ainsi qu'éventuellement d'additifs habituels, puis durcissement à température ambiante ou à des températures plus élevées pouvant aller jusqu'à 120 °C.
